# EUROPÄISCHE PATENTSCHRIFT

(11) **EP 0 523 373 B1**
(45) Veröffentlichungstag und Bekanntmachung des Hinweises auf die Patenterteilung: **16.08.1995**
(21) Anmeldenummer: 92109892.7
(22) Anmeldetag: 12.06.1992
(51) Int. Cl.: B60H 1/00

(54) **Fahrgastraumheizung für ein Kraftfahrzeug, insbesondere für einen Omnibus**
Passenger compartment heating for a motor vehicle, in particular for an omnibus
Chauffage d'habitacle d'un véhicule automobile, en particulier d'un omnibus

(30) Priorität: 18.07.1991 DE 4123884
(43) Veröffentlichungstag der Anmeldung: 20.01.1993
(73) Patentinhaber: MERCEDES-BENZ AG, 70327 Stuttgart (DE)
(72) Erfinder: Schanzer, Hans-Peter, Dipl.-Ing., W-7220 Bietigheim-Bissingen (DE); Kalt, Hans-Peter, Dipl.-Ing., W-7036 Schönaich (DE); Lüders, Michael, Dipl.-Ing., W-7046 Gäufelden (DE)

(56) Entgegenhaltungen:
- EP-A- 0 213 226
- DE-A- 3 002 628
- DE-A- 3 612 816
- FR-A- 1 595 541
- US-A- 2 799 481
- PATENT ABSTRACTS OF JAPAN vol. 9, no. 162 (M-394)(1885) 6. Juli 1985 & JP-A-60 035 620 (RIYOUZOU KASE) 23.02.1985

## Beschreibung

Die Erfindung betrifft eine Fahrgastraumheizung für ein Kraftfahrzeug, insbesondere für einen Omnibus, bestehend aus von einem Wärmeträger durchflossenen Rohren, die in rinnenartigen Trägern angrenzend an eine Fahrzeugwand, insbesondere einen Boden, gehalten und von einem als Isolierung vorgesehenen Kunststoffschaum umgeben sind.

Es ist bekannt, zur Beheizung des Innenraumes eines Omnibusses in dessen Mittelgang Heizungsrohre in einer rinnenförmigen Vertiefung zu verlegen (US-A-21 91 526), diese Rohre dort zu fixieren und den rinnenartigen, in einem Bodenblech angeordneten Teil durch ein Abdeckblech zu verschließen. Da sowohl der rinnenartige Träger, als auch die Rohre und der deckelartige Abschluß jeweils durch Schrauben, Nieten o.dgl. befestigt werden müssen, ist diese Art der Ausbildung einer Fahrgastraumheizung aufwendig.

Es ist auch eine Fahrgastraumheizung der eingangs genannten Art bekannt geworden (DE-A-30 02 628), bei der in einem Bereich des Mittelganges eines Omnibusses ein Bodenhohlraum vorgesehen ist, der rinnenartige Träger für Heizungsrohre aufnimmt und zur Verhinderung von Abstrahlungsverlusten mit einem Kunststoff ausgeschäumt ist. Dort wird das Ausschäumen aber erst nach dem Einbau der Heizung vorgenommen, die dort ebenfalls mit Schrauben oder Nieten am Rohbau befestigt wird.

Die US-A-2 799 481 zeigt eine Bodenheizung gemäß dem Oberbegriff des Anspruchs 1.

Der vorliegenden Erfindung liegt die Aufgabe zugrunde, eine Fahrgastraumheizung der eingangs genannten Art so auszubilden, daß eine einfache Handhabung, insbesondere auch bei der Endmontage im Fahrzeug, möglich ist.

Zur Lösung dieser Aufgabe ist bei einer Fahrgastraumheizung der eingangs genannten Art vorgesehen, daß die Rohre, die Träger und der Kunststoffschaum Teile einer selbsttragenden Platte sind, die aus mindestens zwei stabilen Seitenkanten und einer diese auf einer Seite verbindenden durchgehenden Wand besteht, an der die Träger mit Flanschen angebracht sind, daß die Seitenkanten an ihrem Rand mindestens eine parallel und im Abstand zu der Wand verlaufende glatte Befestigungsfläche besitzen, die nach der von der Wand abgewandten Seite weist und in eine Seitenwand übergeht, die den Kunststoffschaum einfaßt und mit der Seitenwand des gegenüberliegenden Einfassungsprofiles mit einer Abdeckung in Verbindung steht. Durch diese Ausgestaltung kann eine komplett vorgefertigte, selbsttragende Platte gebildet werden, die mit ihrem Befestigungsrand, der in besonders einfacher Weise eine glatte Klebefläche aufweisen kann, unmittelbar in die Fahrzeugkarosserie eingesetzt und befestigt werden kann. Es ist dann nur noch nötig, die Heizungsrohre anzuschließen. Ein nachträgliches Ausschäumen des Hohlraumes wird überflüssig, ebenso wie umständliche Befestigungsvorgänge mit Hilfe von Schrauben o.dgl.

Vorteilhafte Weiterbildungen der Erfindung sind in den Unteransprüchen gekennzeichnet. So können nach dem Anspruch 2 die Seitenkanten in besonders einfacher Weise als gezogene Einfassungsprofile, z.B. aus Aluminium, ausgebildet sein, die mindestens teilweise Hohlprofile sind und daher besonders stabil sein können. Diese Einfassungsprofile werden nach dem Anspruch 3 mit einer durchgehenden wärmeleitenden Flächenheizungsplatte verbunden, die zusammen mit den als Träger für die Heizungsrohre nach Anspruch 4 dienenden U-förmigen und nach einer Seite offenen Profilen ein bereits relativ steifes plattenförmiges Gebilde darstellen. Hierzu dienen insbesondere auch die an der Flächenheizungsplatte befestigten Flansche der U-förmigen Träger in Verbindung mit der als Unterzug dienenden Abdeckung und der Kunststoffausschäumung. Somit wird ein stabiles Plattengebilde geschaffen, das sich leicht einkleben läßt und auch die für eine Bodenplatte notwendigen Eigenschaften aufweist. Für die Herstellung des neuen Bauteiles für die Fahrgastraumheizung ist es besonders vorteilhaft, nach Anspruch 5 die U-Profile der Träger für die Rohre zumindest auf einem Teil ihrer Länge durch bügelartige Deckelteile zu schließen, wobei nach Anspruch 6 die Deckelteile und die freien Schenkel der U-Profile mit ineinander ragenden Profilierungen versehen sein können. Auf diese Weise können die Heizungsrohre zur Herstellung der Platte in die noch offenen U-Profile eingesetzt und durch Aufrasten der Deckelteile gesichert werden. Die so geschaffenen Körper werden dann ausgeschäumt und durch die Abdeckung verschlossen, so daß die dann gebildete Bodenplatte nur noch im Fahrzeug eingeklebt zu werden braucht.

Die Erfindung ist anhand eines Ausführungsbeispiels in der Zeichnung dargestellt und wird im folgenden erläutert. Es zeigen:
- Fig. 1: eine schematische und teilweise aufgebrochene Ansicht einer selbsttragenden Platte für eine Fahrgastraumheizung nach der vorliegenden Erfindung von der Unterseite her gesehen,
- Fig. 2: den Schnitt durch die Platte der Fig. 1 längs der Linie II-II,
- Fig. 3: den Schnitt durch die Platte der Fig. 1 längs der Linie III-III, in vergrößerter Darstellung,
- Fig. 4: eine schematische Darstellung des Einbaues der Platte der Fig. 1 in einen Omnibus, in einem Querschnitt quer zur Längsrichtung des Omnibusses gesehen und
- Fig. 5: die vergrößerte Darstellung eines Teilschnittes längs der Linie V-V der Fig. 4 mit der Darstellung der Anordnung der Platte an ihrem vorderen Ende.

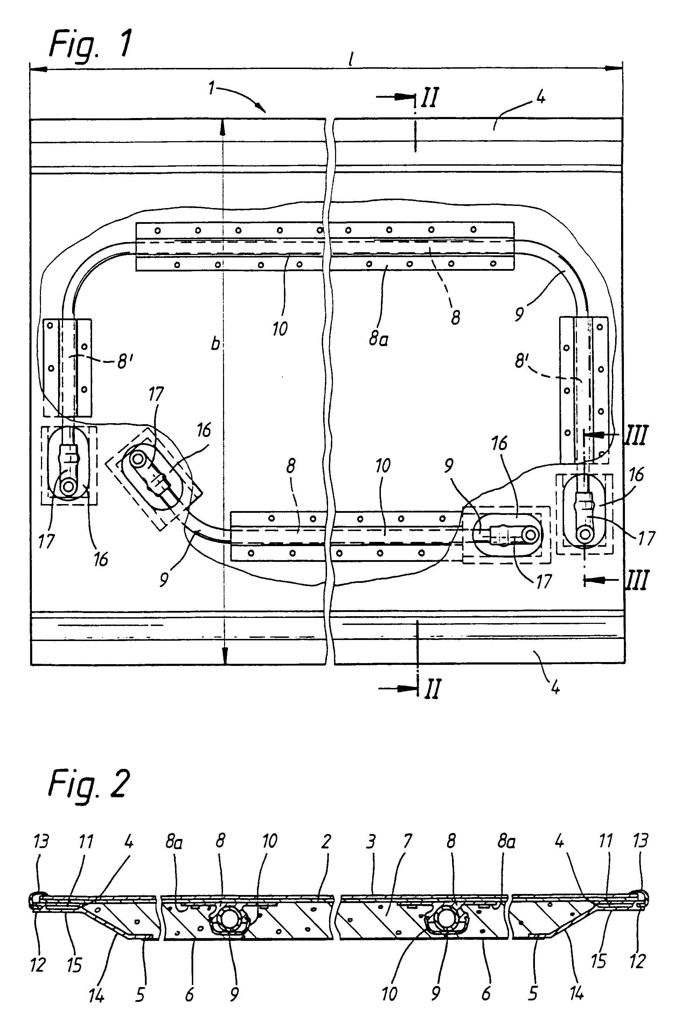

In den Fig. 1 bis 3 ist eine selbsttragende Platte (1) gezeigt, die beim Ausführungsbeispiel eine bestimmte Breite (b) und eine Länge (1) aufweist die, bei Verwendung für einen Omnibus, bis zu 10 m betragen kann. Diese selbsttragende Platte (1), die in der Fig. 1 nur in ihren beiden Endabschnitten gezeigt ist, besteht aus einer durchgehenden metallischen oberen Platte (2) mit einem aufgeklebten Fußbodenbelag (3), aus zwei die Seitenkanten der Platte (1) bildenden gezogenen Profilen (4), z.B. aus Aluminium, aus einer die nach innen weisenden Ränder (5) der Profile (4) untereinander verbindenden Abdeckung (6) sowie aus einer den Hohlraum zwischen oberer Platte (2) und Abdeckung (6) ausfüllenden Kunststoffüllung (7). Innerhalb des Hohlraumes sind nahezu über die gesamte Länge (1) der Platte (1) verlaufende U-profilförmige Träger (8) angeordnet, die jeweils mit einem Flansch (8a) fest mit der metallischen Wand (2) verbunden, z.B. durch Punktverschweißen oder durch verkleben angebracht sind. Die Träger (8) verlaufen im wesentlichen parallel zueinander und parallel zu den beiden seitlichen Profilen (4).

In die U-förmig offenen Träger (8) sind Rohre (9) eingelegt, die in den formschlüssig an sie angepaßten Trägern (8) durch Schnappdeckel (10) gehalten werden, die mit ihren beiden äußeren Rändern in entsprechende Ausnehmungen an den Schenkeln der Träger (8) einrasten. Die Deckel (10) sind dabei so ausgebildet, daß sie dann, wenn sie in ihre entsprechenden Ausnehmungen einrasten, die Rohre (9) fest und formschlüssig in den Trägern (8) halten. Sind die Träger (8) auf diese Weise mit den Rohren (9) versehen, dann wird die Kunststoffüllung (7) eingebracht und anschließend die Abdeckung (6) aufgesetzt, beispielsweise aufgeklebt.

Es ist zu erkennen, daß die gezogenen Einfassungsprofile (4) in ihren jeweiligen Außenbereichen mit durchgehenden Hohlkammern (11) versehen sind, an die ein nach außen offener Schlitz (12) anschließt, der dazu ausgenutzt wird,ein seitliches Abdeckungsprofil (13) zu halten, das die Außenkanten des Bodenbelages (3) schützt.

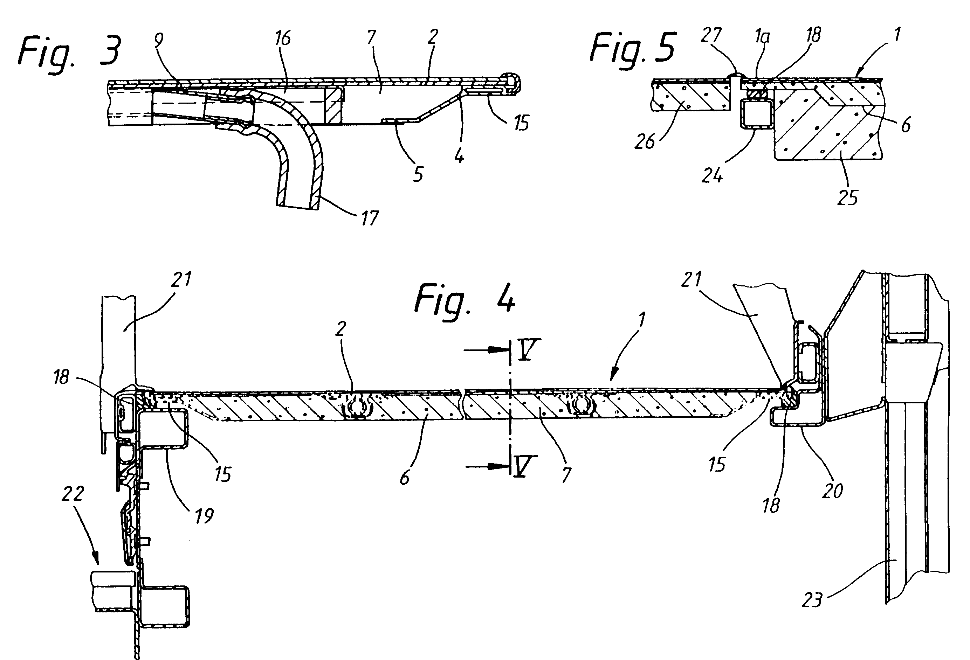

Nach innen hin sind die Einfassungsprofile mit einer von dem Bereich des Randes unterhalb der Hohlkammern (11) schräg nach innen verlaufenden Seitenwand (14) versehen, die dann in die beiden Ränder (5) übergeht, an denen die Abdeckung (6) befestigt ist. Es wird erkennbar, daß im Bereich der Hohlkammern (11) eine glatte und zu der Platte (2) im wesentlichen parallele Befestigungsfläche (15) gebildet ist, die, wie noch anhand der Fig. 4 deutlich werden wird, als Kleberand dienen kann.

Die Fig. 1, 2 und 3 zeigen außerdem die Enden der Rohre (9), die in Hohlräume (16) innerhalb der Schaumstoffüllung (7) führen. Hier können Verbindungsschläuche (17) an die Rohrenden angesetzt werden, durch die der fluide Wärmeträger, insbesondere das Motorkühlwasser, den Rohren (9) zugeführt werden kann. Der Wärmekontakt zu der an den Fahrgastraum angrenzenden Platte (2) erfolgt im wesentlichen über die Träger (8), deren Flansche (8a) in engem Wärmekontakt mit der Platte (2) stehen. Da eine Wärmeabfuhr nach außen durch den isolierenden Kunststoffschaum (7) verhindert wird, ist eine gute Ausnützung der Wärmeenergie gewährleistet.

Zum Verständnis sei noch darauf hingewiesen, daß in der Fig. 1 in den Bereichen, in denen die Träger (8) mit den Rohren (9) zu sehen sind, sowohl die Abdeckung (6) als auch die Kunststoffüllung (7) nicht dargestellt ist, damit der Aufbau der Platte (1) deutlich wird. In den senkrecht zu den seitlichen Profilen (4) verlaufenden Stirnbereichen sind, wie Fig. 1 ebenfalls zeigt, Träger (8') für die Rohre (9) angeordnet, die ebenso ausgebildet sind, wie die Träger (8) die parallel zu den Profilen (4) verlaufen.

Die Fig. 4 und 5 zeigen, daß die neue vorgefertigte stabile Bauplatte (1) mit den Befestigungsflächen (15) unter Zwischenfügung von Kleberaupen (18) auf Längsträger (19 bzw. 20) der Omnibuskarosserie aufgelegt und dort gehalten ist. Die Montage dieser Platte ist dadurch sehr einfach. In der Fig. 4 ist die Anordnung der Platte (1) im Bereich unterhalb der Fahrzeugsitze eines Omnibusses gezeigt, wobei die Sitze in nicht näher dargestellter Weise an den Stützen (21) befestigt sind. Der Fahrgastraum unterhalb der Sitze kann daher in einfacher Weise mit einem Boden und mit einer Fußbodenheizung versehen werden. Diese durchgehende und von der Platte (1) gebildete Fläche geht zur Fahrzeugmitte hin in den Mittelgang (22) über, in dem natürlich ebenfalls eine Platte, ähnlich der Platte (1), angeordnet sein kann. Die Fahrzeugaußenwand (23) liegt auf der anderen Seite der Platte (1) vom Mittelgang (22) abgewandt.

Die Fig. 5 zeigt schematisch, daß die Platte (1) an ihrem vorderen Ende (1a) auf einem Querträger (24) unter Zwischenfügung eines Dichtstreifens (18) aufgelegt ist. Die Platte (1) besitzt in diesem Stirnbereich, wie auch aus den Fig. 1 und 2 hervorgeht, keine Einfassungsprofile. Sie wird hier lediglich mit der unteren Abdeckung (6) aufgelegt und gehalten. Neben und unterhalb dieses Endes kann noch eine zusätzliche Kunststoffschicht (25) o.dgl. vorgesehen werden. Die Platte (1) schließt an eine andere Bodenplatte (26) an, wobei der Spalt zwischen der Platte (26 und 1) durch einen Abdeckstreifen (27) überbrückt ist.

## Patentansprüche

1. Fahrzeugboden mit einer Heizung für einen Omnibus, bestehend aus von einem Wärmeträger (8) durchflossenen Rohren (9), die in rinnenartigen Trägern angrenzend an den Fahrzeugboden gehalten und von einem als Isolierung vorgesehenen Kunststoffschaum (7) umgeben sind,
**dadurch gekennzeichnet,**
daß die Rohre (9), die Träger (8) und der Kunststoffschaum (7) Bestandteile einer vorgefertigten, selbsttragenden Platte (1) sind, die als einteilige Bodenplatte in das Fahrzeug eingepaßt werden kann und die aus mindestens zwei stabilen Seitenkanten in der Form von gezogenen Einfassungsprofilen (4) und einer diese auf einer Seite verbindenden durchgehenden Wand (2) besteht, an der die Träger (8) mit Flanschen (8a) angebracht sind, daß die Einfassungsprofile (4) an ihrem Rand mindestens eine parallel und in Abstand zu der Wand (2) verlaufende glatte Befestigungsfläche (15) besitzen, die nach der von der Wand abgewandten Seite weist und in eine Seitenwand (14, 5) übergeht, die den Kunststoffschaum (7) einfaßt und mit der Seitenwand des gegenüberliegenden Einfassungsprofils (4) mit einer Abdeckung (6) in Verbindung steht und daß die Enden der Rohre in Hohlräume (16) innerhalb der Schaumstoffüllung (7) münden und dort an den Wärmeträger führende Leitungen oder Schläuche (17) anschließbar sind.

2. Fahrgastraumheizung nach Anspruch 1,
**dadurch gekennzeichnet,**
daß die Seitenkanten von gezogenen Einfassungsprofilen (4), insbesondere aus Aluminium, gebildet sind.

3. Fahrgastraumheizung nach Anspruch 1 oder 2,
**dadurch gekennzeichnet,**
daß die Befestigungsfläche (15) als eine glatte Klebefläche ausgebildet ist.

4. Fahrgastraumheizung nach einem der Ansprüche 1 bis 3,
**dadurch gekennzeichnet,**
daß die Wand (2) eine Flächenheizungsplatte aus einem wärmeleitenden Material ist.

5. Fahrgastraumheizung nach einem der Ansprüche 1 bis 4,
**dadurch gekennzeichnet,**
daß als Träger (8) U-förmige und nach einer Seite offene Profile mit einem an der geschlossenen Seite vorgesehenen Flansch (8a) vorgesehen sind, der fest an der Wand (2) angebracht ist.

6. Fahrgastraumheizung nach Anspruch 5,
**dadurch gekennzeichnet,**
daß die U-förmigen Profile (8) zumindest auf einem Teil ihrer Länge durch bügelartige Deckelteile (10) geschlossen sind.

7. Fahrgastraumheizung nach Anspruch 6,
**dadurch gekennzeichnet,**
daß die Deckelteile (10) und die freien Schenkel der U-Profile (8) mit ineinander rastenden Profilierungen versehen sind.

## Claims

1. A vehicle floor with heating, for an omnibus and consisting of pipes (9) through which a heat carrier (8) flows and which are supported in channel-like carriers adjacent the vehicle floor, said pipes being enclosed in synthetic plastics foam (7) which is provided as an insulation, characterised in that the pipes (9), the carriers (8) and the synthetic plastics foam (7) are constituent parts of a prefabricated self-supporting panel (1) which can be fitted into the vehicle as a one-piece floor panel and which consists of at least two stable lateral edges in the form of drawn edging sections (4) and a continuous wall (2) which connects them on one side and on which are mounted the carriers (8) with flanges (8a) and in that the edging sections (4) have on their edge at least one smooth fixing surface (15) which extends parallel with and at a distance from the wall (2) and which faces the side remote from the wall and merges into a lateral wall (14, 5) which surrounds the synthetic plastics foam (7) and communicates with the side wall of the oppositely disposed edging section (4) with a covering (6) and in that the ends of the pipes open out into cavities (16) inside the synthetic plastics filling (7) where they can be connected to conduits or hoses (17) carrying the heat carrier.

2. Passenger compartment heating according to Claim 1, characterised in that the lateral edges are constituted by drawn edging sections (4), particularly of aluminium.

3. Passenger compartment heating according to Claim 1 or 2, characterised in that the fixing surface (15) is constructed as a smooth gluing surface.

4. Passenger compartment heating according to one of Claims 1 to 3, characterised in that the wall (2) is a surface heating panel consisting of a heat-conductive material.

5. Passenger compartment heating according to one of Claims 1 to 4, characterised in that U-shaped profiles open towards one side and with a flange (8a) provided on the closed side are provided as carriers (8), the flange (8a) being rigidly mounted on the wall (2).

6. Passenger compartment heating according to Claim 5, characterised in that at least a part of the length of the U-shaped profiles (8) is closed by stirrup-like cover parts (10).

7. Passenger compartment heating according to Claim 6, characterised in that the cover parts (10) and the free arms of the U-shaped profiles (8) are provided with inter-engaging profilings.

## Revendications

1. Plancher de véhicule comportant un dispositif de chauffage, pour un autobus, constitué par des tubes (9), qui sont parcourus par un fluide caloporteur et qui sont retenus dans des supports (8) en forme de gouttières, dans une position contiguë au plancher du véhicule et sont entourés par une mousse de matière plastique (7) prévue comme isolant,
caractérisé en ce
que les tubes (9), les supports (8) et la mousse de matière plastique (7) sont des éléments constitutifs d'une plaque autoportante préfabriquée (1), qui peut être montée sous la forme d'une plaque de plancher monobloc dans le véhicule et est constituée par au moins deux bords latéraux stables sous la forme de profilés d'encadrement emboutis (4) et par une paroi continue (2), qui relie ces profilés d'un côté et sur laquelle les supports (8) s'appliquent au moyen de brides (8a), que les profilés d'encadrement (4) possèdent, sur leur bord, au moins une surface lisse de fixation (15) qui s'étend parallèlement et à distance de la paroi (2) et qui est tournée vers le côté opposé à la paroi et se prolonge par une paroi latérale (14, 5), qui enserre la mousse de matière plastique (7) et est reliée à la paroi latérale du profilé d'encadrement opposé (4), par un élément de revêtement (6) et que les extrémités des tubes débouchent dans des cavités (16) situées à l'intérieur du remplissage en matériau mousse (7) et peuvent être raccordées, en cet endroit, à des canalisations ou des tuyaux (17) véhiculant le fluide caloporteur.

2. Dispositif de chauffage d'habitacle selon la revendication 1, caractérisé en ce que les bords latéraux sont formés par des profilés d'encadrement emboutis (4) réalisés notamment en aluminium.

3. Dispositif de chauffage d'habitacle selon la revendication 1 ou 2, caractérisé en ce que la surface de fixation (15) est réalisée sous la forme d'une surface adhésive lisse.

4. Dispositif de chauffage d'habitacle selon l'une des revendications 1 à 3, caractérisé en ce que la paroi (2) est une plaque de chauffage par surface étendue réalisée en un matériau thermoconducteur.

5. Dispositif de chauffage d'habitacle selon l'une des revendications 1 à 4, caractérisé en ce qu'il est prévu, comme supports (8), des profilés en forme de U, ouverts d'un côté et comportant une bride (8a) qui est prévue sur le côté fermé et qui est montée de façon fixe sur la paroi (2).

6. Dispositif de chauffage d'habitacle selon la revendication 5, caractérisé en ce que les profilés en forme de U (8) sont fermés au moins sur une partie de leur longueur, par des éléments formant couvercles en forme d'étriers (10).

7. Dispositif de chauffage d'habitacle selon la revendication 6, caractérisé en ce que les éléments formant couvercles (10) et les branches libres des profilés en U (8) ont des profils qui s'encliquettent réciproquement.
